Europäisches Patentamt

European Patent Office

Office européen des brevets

(11) Publication number: **0 098 680**
**B1**

## (12) EUROPEAN PATENT SPECIFICATION

(45) Date of publication of patent specification: **15.10.86**

(21) Application number: **83301590.2**

(22) Date of filing: **22.03.83**

(51) Int. Cl.⁴: **H 01 M 2/16**

(54) **Method of fabricating improved separator.**

(30) Priority: **17.06.82 US 389199**

(43) Date of publication of application:
**18.01.84 Bulletin 84/03**

(45) Publication of the grant of the patent:
**15.10.86 Bulletin 86/42**

(84) Designated Contracting States:
**DE FR GB IT**

(56) References cited:
**FR-A-2 360 180**

(73) Proprietor: **YARDNEY ELECTRIC CORPORATION**
**82 Mechanic Street**
**Pawcatuck Connecticut (US)**

(72) Inventor: **Chireau, Roland F.**
**57 Washington Street**
**New London CT 06320 (US)**

(74) Representative: **Wilson, Joseph Martin et al**
**WITHERS & ROGERS 4 Dyer's Buildings Holborn**
**London EC1N 2JT (GB)**

Courier Press, Leamington Spa, England.

# 0 098 680

## Description

The present invention generally relates to separators for alkaline batteries and more particularly to improved silverized and titanized cellulosic separators.

### Prior Art

U.S. Patent No. 4,091,185, issued May 23, 1978, is directed to the preparation of separators for electrochemical batteries, such as silver-zinc batteries. In accordance with the disclosure therein, a silverized cellulosic separator is introduced into a silver-zinc battery; a titanium-containing compound is added to the cell either by painting it onto the silverized cellulosic material or by adding it to the electrolyte or to the zinc electrode. It can also be added to a separate sheet placed between the separator and the electrode, which sheet functions as a negative inter-separator by subjecting the cell to a series of charge-discharge cycles. Although this procedure results in a satisfactory separator which is capable of inhibiting the migration of silver ions from the silver electrode through the electrolyte to the zinc electrode, thus inhibiting self-discharge and eventual cell circuiting, the cell is not immediately fully protected against such migration since the titanium-silver complex is only generated as the cell is used.

### Summary of the Invention

The improved method of the present invention satisfies the foregoing needs. It comprises a method wherein a sheet of regenerated cellulose to be used as a separator in an electrochemical cell is contacted with a first aqueous reagent containing a silverizing material or a titanizing material. The contact is maintained at a temperature and for a time sufficient to substantially introduce into the cellulosic material an effective concentration of silver and titanium. Thereafter in a separate step, the cellulosic sheet is contacted with a second separate aqueous reagent containing the other of the two titanizing and silverizing materials so as to introduce into the cell either titanium or silver to complete the introduction of both titanium and silver into the sheet. Such introduction is carried out at a temperature and for a time sufficient to cause the formation of an effective concentration of a titanium-silver complex in the sheet. Thereafter, the sheet is separated from contact with the second reagent, then washed and dried.

The finished separator can then be introduced into an alkaline electrolyte-containing battery having electrodes of silver and cadmium or nickel and cadmium or nickel and iron or nickel and zinc or silver and zinc or mercuric oxide and zinc or mercuric oxide and cadmium. In each instance, the separator effectively prevents migration of dissolved ions from one electrode through the electrolyte to the other electrode, therefore inhibiting self-discharging and eventual short circuiting of the battery. In the case of silver and zinc electrodes, silver ions are inhibited from migrating to the zinc electrode. Moreover, the separator resists chemical degradation including oxidative attack.

Since the method can be carried out rapidly and effectively in separate baths outside the electrochemical cell, a fully operational, fully protective separator which includes the formed silver-titanium complex is introducible into the cell for maximum initial effectiveness, in contrast to in situ generated silver-titanium complex-containing separators. Further features of the present invention are set forth in the following description.

### Detailed Description

In accordance with the method of the present invention, a sheet of regenerated cellulose for use as a separator in electrochemical cells is selectively impregnated with two different reagents in sequence to separately introduce silver and titanium into the cellulose and to form the same into a complex in the cellulose, to improve the oxidation resistance of the cellulose and the operating characteristics of the electrochemical cell. The sheet of regenerated cellulose which is impregnated is a flexible sheet or plurality of sheets having cellulosic surface components. For example, the cellulosic material can include regenerated cellulose produced by the xanthate process, by the viscose process, by denitration of cellulose nitrate, by the cuprammonium process or by deacetylation of cellulose acetrate. It is preferred that the cellulosic sheet material consist of semi-permeable regenerated cellulose produced by the viscose process. Material such as cellophane 150—PD (available from DuPont de Nemours & Co) is preferred or a similar product sold under the designation PUDO—193.

The impregnations are carried out in any suitable treating zone outside of an electrochemical cell at concentrations, times and temperatures sufficient to result in a total concentration of silver and titanium in the cellulose of about 0.05 to about 15 weight %. The silver can be introduced into the cellulose by any suitable technique such as silverizing in the manner set forth, in U.S. Patent No. 2,785,106 or U.S. Patent No. 3,013,099, or, for that matter, by use of a technique such as described in any of the following U.S. patents: No. 3,091,554, No. 3,224,908, No. 3,376,168, and No. 3,401,049. However, it is preferred that the impregnated solution containing the silver can be in the form of an aqueous solution of silver nitrate wherein the concentration of silver nitrate in the water is about 1% by wt. and wherein the solution also contains about 1% by wt. of sodium acetate. Utilizing that solution, a typical impregnation of cellulose is carried out in a tank, beaker or the like by immersing the cellulose in the aqueous silver nitrate-sodium acetate-containing water solution and maintaining the contact for about 30—60 minutes while the solution

2

is maintained at an elevated temperature of about 70—80°C. This results in providing the regenerated cellulose with a silver content of about 1—2% by weight.

The regenerated cellulose can then be removed from the treating zone, rinsed with water and immersed into the second treating solution. It will be understood that, for example, potassium acetate can be substituted for the sodium acetate and that any water soluble silver salt can be used to supply the silver to the cellulose. For example, silver diamino complex solution can be used along with a solution of formaldehyde, the cellophane first being introduced into the diamino complex solution for a minute and the immersed preferably for a few seconds, for example about three seconds in a solution of formaldehyde. The silver diamino complex may for example comprise about 20 grams of silver nitrate, 200 cm$^3$ of distilled water, 50 cm$^3$ of 10% aqueous sodium hydroxide solution and 65 cm$^3$ of 38% ammonium hydroxide solution. The formaldehyde solution may for example comprise 500 cm$^3$ of 40% aqueous formaldehyde solution plus 1500 cm$^3$ of distilled water. Other soluble silver compounds such as the following can be used: silver acetate, silver propionate and silver fluoride. In most instances such soluble salts are utilized in an aqueous solution with either sodium acetate or potassium acetate or a mixture thereof and the solution temperature is between about 50°C. and about 100°C.

The second type of impregnation which is carried out on the regenerated cellulose is a titanizing impregnation wherein the titanium in colloidal form is introduced into the cellulose and reacts with silver in the cellulose to form a silver-titanium complex attached to the cellulose chain. Any suitable titanium compound can be used in solution as the impregnating agent. For example, titanium tetrachloride dispersed in toluene can be used to impregnate the cellulose and thereafter reduced to titanium metal in the cellulose in the presence of methyl magnesium bromide. Alternatively, the cellophane can be immersed in an aqueous solution of titanium sulfur oxide preferably containing about 1% of sodium carbonate, the titanium compound also preferably being present in a concentration of about 1%. The contacting solution is maintained for about 30—60 minutes at a temperature of about 70—80°C to effect the desired titanizing of the cellulose.

Another method of titanizing the regenerated cellulose can be effected by immersing the cellulose in an aqueous solution of titanium chloride prepared by mixing titanium oxide and hydrochloric acid together in water. Antimony oxide is then added in a suitable concentration. For example 48 grams of titanium oxide and 26 grams of hydrochloric acid can be added to 1 liter of water, whereupon 100 grams of antimony oxide can be added to the water. The solution is then heated to about 75°C or the like, whereupon cellophane or other cellulose is immersed therein and allowed to remain therein about 10 minutes. It is then removed and washed with sodium carbonate or the like to neutralize excess acidity.

It will be understood that the silverised step can either be taken first or last, as can the titanizing step. In either case colloidal silver and colloidal titanium are introduced into the regenerated cellulose sequentially and reacted therein to form a titanium silver complex which attaches to the cellulose chain and provides the improved results. Those results include improving the oxidation resistance of the cellulose to inhibit its degradation when used as a separator in an electrochemical cell such as an silver-zinc battery. The cellulosic separator material is also utilizable with other types of alkaline batteries such as rechargeable nickel-zinc batteries and for batteries incorporating silver and cadmium electrodes, nickel and cadmium electrodes and nickel and iron electrodes, mercuric oxide and zinc electrodes and mercuric oxide and cadmium electrodes.

The purpose of the separator is to physically isolate the two electrodes of the battery or cell from each other in order to prevent their contacting each other or contaminating each other. Contamination arises when salts of a metal of one of the electrodes such as silver salts are formed because of the solubility of the electrode in the alkaline electrolyte which is usually highly concentrated potassium hydroxide. In the case of silver cells, silver salts are formed. Such salts can migrate through the electrolyte to the other electrode, causing the cell or battery to self-discharge and eventually short circuit. The separator retards this migration through the electrolyte while still permitting a high permeation of the electrolyte through the separator to both electrodes.

Oxidation and chemical degradation of the cellulose separator normally occurs because of the effects of the concentrated alkaline electrolyte and the oxidizing effect of the dissolved metal salt, silver salts in the case of silver electrode-containing cells. In silver electrode-containing cells, metallic silver and silver oxide are deposited in the separator. There is considerable evidence to substantiate the conclusion that the degradation of the separator occurs in the form of a redox reaction involving an oxidative attack on the cellulosic separator by the soluble silver salt while the silver deposition result in a complementary reduction of the silver salt to its lower valence states. The following specific examples further illustrate certain features of the present invention.

Example I

Cellophane (PUDO—193 — available from E. I. du Pont de Nemours & Co) was immersed in a water solution containing 1% silver nitrate and 1% sodium acetate. The solution was at a temperature of about 70—80°C. and was maintained at that temperature for a period of 30—60 minutes during which time the cellophane was fully immersed therein. The cellophane was then removed from the solution and found to be darkly coloured with a silver content of about 1—2% by weight. The cellophane was washed with distilled water and then immediately immersed in a second aqueous solution containing 1% by weight of

3

titanium sulfur oxide and 1% by weight of sodium carbonate. The immersion was carried out for 30 minutes while the solution was kept at about 80°C. The cellophane was then withdrawn from this second solution, washed with distilled water and dried. It was found to contain a brown-black appearance and to incorporate silver-titanium complex attached to the cellulose chain. The complex was present in a concentration of about 1.5% by weight. The cellophane when placed in a silver-zinc electrochemical cell exhibited superior oxidation resistance in contrast to silverised untitanized cellophane and in contrast to cellophane which had not been silverized or titanized. The improved separator exhibited improved resistance to silver penetration when used as a separator between electrodes of the cell during the operation of the cell.

The following data will demonstrate the improvement achieved in the electrical performance of a cell which incorporates the silver-titanium complex, prepared in accordance with Example 1, in the separator in contrast to cells which have only silverized or non-silverised separators.

Ten (10) ampere-hour cells were built where the separator material was the only variable introduced in the cell design.

*Group A* cells were fabricated with the silver-titanium complex treated cellophane separator of Example 1.

*Group B* cells were fabricated with C—19 (silver treated cellophane) separator.

*Group C* cells were fabricated with untreated cellophane separator.

Test cells were fabricated using the above described separators disposed between electrodes. The cells consisted of four positive (silver) electrodes, each 1.875 in. (4.8 cm) wide × 3.00 in. (7.62 cm) high and 0.027 in (0.068 cm) thick and five negative (zinc) electrodes, each measuring 1.875 in (4.8 cm) wide × 3.00 in. (7.62 cm) high and 0.042 in. (0.1 cm) thick, made into an LR10—6 cell assembly. The cell pack was placed in a plastic cell case which was sealed with a cover terminal assembly and the cell was filled with a 45 weight percent solution of aqueous potassium hydroxide.

The three groups of cells were allowed to soak for 72 hours and then given two formation cycles consisting of two consecutive charge-discharge cycles (charge at 0.6 amperes to 2.05 volts cut-off, discharge at 4 amperes to 1.00 volt cut-off.) The capacity (AH) obtained from each of the cell groups on the second formation cycle discharge was:

|         |      |      |      |
|---------|------|------|------|
| Group A | 10.2 | 10.4 | 10.0 |
| Group B | 9.1  | 8.7  | 8.0  |
| Group C | 6.0  | 5.4  | 6.5  |

Next the cells were placed on a continuous cycling regime (charge at 0.6 amperes to 2.05V, discharge at 4 amperes to 1.0V). The results are summarized in the table below and show the improvement in oxidation resistance and performance exhibited by the cell group (A) which contained the silver-titanium complex treated cellophane in comparison to the other two groups (B and C).

TABLE

| Cell Group (3 cells each) | Separator | Cycles to Short Maximum | Cycles to Short Minimum | Appearance of Separator Upon Dissection |
|---|---|---|---|---|
| A | Ag-Titanium treated Cellophane | 40 | 34 | Dark brown colour Material intact |
| B | Ag-treated cellophane | 15 | 6 | Yellow-tan colour Material weak |
| C | Cellophane | 8 | 2 | Material disintegrated |

Accordingly, an improved method is provided for fully protecting a silver-zinc cell or the like.

Example II

Cellophane of the PUDO—193 type was first totally immersed in an aqueous titanium tetrachloride formed by mixing 48 grams of titanium oxide and 26 grams of hydrochloric acid into 1 litre of water and then adding 100 grams of antimony oxide to the solution. The immersion was maintained for 10 minutes while the solution was maintained at about 75°C. The cellophane was then withdrawn from the solution and washed with an aqueous solution containing 3% sodium carbonate to neutralize excess activity. The sheet at this point incorporated a titanium-antimony cellulosate having a titanium content of about 8%.

4

The titanized sheet was then impregnated with a silver salt in accordance with the immersion technique set forth in Example 1 except that potassium acetate was used in the silver nitrate-contacting bath in place of sodium acetate. The resulting silverized and titanized cellophane had a concentration of silver-titanium complex of about 9% by weight of the cellophane and performed similar to the silverized-titanized separator material prepared in accordance with Example 1.

Cellophane material that had been treated in accordance with the procedure described in Example II was used as a separator in ten ampere-hour (10 AH) test cells. The cell design parameters that were followed in building the cells and the test procedures used were identical to those outlined in Example I, except that in this case only one set of control cells was fabricated (Group B below).

The results obtained on the continuous cycling regime (charge at 0.6 amperes to 2.05 volts; discharge at 4 amperes to 1.0 volt), following the 90 day wet stand period are shown below.

TABLE

| Cell Group (3 cells each) | Separator | Cycles to Short | | Appearance of Separator Upon Dissection |
|---|---|---|---|---|
| | | Maximum | Minimum | |
| Group A (Cells 10—12) | Ag-Titanium treated Cellophane | 38 | 32 | Green-black colour Separator material intact. |
| Group B (Cells 13—15) | Ag-treated cellophane | 10 | 6 | Light tan colour Separator material badly oxidized. |

The above Examples clearly illustrate that a suitable silver-titanium complex can be formed in a cellulosic sheet utilisable as a separator in an electrochemical cell. The method of formation is carried out outside of an electrochemical cell by sequential impregnation steps utilizing separate treating solutions. The method is simple, inexpensive, rapid, reproducible and effective to improve the characteristics of the separator and the operating characteristics of the electrochemical cell incorporating the same.

Various modifications, changes, alterations and additions can be made in the method of the present invention, e.g. as regards its steps and parameters.

The word Cellophane used in this specification is a Registered Trade Mark.

**Claims**

1. A method of making a titanium and silver complex-impregnated cellulosic separator for electrochemical cells, wherein the said method comprises impregnating a sheet of regenerated cellulose in a treating zone outside of an electrochemical cell sequentially with two different selected aqueous reagents for a time and temperature sufficient to separately introduce silver and titanium into the cellulose, and wherein the silver and titanium form a complex in the cellulose to improve the oxidation resistance of the cellulose.

2. A method according to claim 1 wherein impregnation is carried out at a temperature between 70°C and 80°C.

3. A method according to Claim 1 or 2 wherein the silver e.g. in the form of silver nitrate is first introduced into the regenerated cellulose and thereafter titanium e.g. in the form of titanium sulfur oxide or titanium chloride is introduced into the regenerated cellulose or wherein titanium e.g. in the form of titanium sulfur oxide or titanium chloride is first introduced into the regenerated cellulose and thereafter silver e.g. in the form of silver nitrate is introduced into said regenerated cellulose.

4. A method according to claim 3 wherein silver nitrate is present in an aqueous solution in a concentration of about 1% by weight and wherein the solution also contains about 1% by weight of sodium acetate.

5. A method according to claims 3 or 4 wherein impregnation with silver nitrate is carried out at 70—80°C for about 30—60 minutes until the silver content of the regenerated cellulose reaches a level of 1—2% by weight.

6. A method according to claims 3, 4 or 5 wherein the titanium sulfur oxide is present in the reagent in a concentration of about 1% by weight and wherein the reagent also contains about 1% by weight of sodium carbonate.

7. A method according to any of the preceding claims wherein the temperature is about 80°C, and wherein the time is about 30 minutes and the content of titanium deposited in the cellulose is about 0.5% by weight of the cellulose.

8. A method according to claim 3 wherein titanium chloride is present in an aqueous solution in a concentration of about 0.5% by weight and wherein the solution also contains about 1.0% by weight of antimony oxide.

5

9. A method according to Claim 8 wherein the temperature is about 75°C, wherein the time is about 10 minutes and wherein the cellulose is washed with a solution of sodium carbonate after reaction with the first reagent to neutralize excess acidity, the second of the reagents utilized being silver nitrate in aqueous solution at a concentration of about 1% by weight of the said solution.

10. A method according to Claim 9 wherein the silver nitrate solution also contains about 1% by weight of sodium acetate, and wherein impregnation with silver nitrate is carried out at 70—80°C for 30—60 minutes until the silver content of the regenerated cellulose reaches a level of 1—2% by weight of the cellulose, the titanium content of the regenerated cellulose being about 8% by weight after impregnation with the titanium and antimony.

**Patentansprüche**

1. Verfahren zur Herstellung eines Titan und Silber komplex-imprägnierten Zellulose-Separators für elektrochemische Zellen, wobei dieses Verfahren umfaßt das Imprägnieren einer Platte regenerierter Zellulose in einer Behandlungszone außerhalb einer elektrochemischen Zelle sequentiell mit zwei unterschiedlichen gewählten wässrigen Reagenzien für einen Zeitraum und bei einer Temperatur, die ausreichen, Silber und Titan separat in die Zellulose einzuführen, und wobei das Silber und das Titan einen Komplex in der Zellulose bilden, um die Oxidationswiderstandsfähigkeit der Zellulose zu verbessern.

2. Verfahren nach Anspruch 1, wobei die Imprägnierung bei einer Temperatur zwischen 70°C und 80°C ausgeführt wird.

3. Verfahren nach Anspruch 1 oder 2, worin das Silber zum Beispiel in der Form von Silbernitrat zuerst in die regenerierte Zellulose eingeführt wird und danach Titan zum Beispiel in Form von Titan-Schwefeloxid oder Titan-Chlorid in die regenerierte Zellulose eingeführt wird oder worin Titan zum Beispiel in der Form von Titan-Schwefeloxid oder Titan-Chlorid zuerst in die regenerierte Zellulose eingeführt wird und danach Silber zum Beispiel in der Form von Silbernitrat in die regenerierte Zellulose eingeführt wird.

4. Verfahren nach Anspruch 3, worin Silbernitrat in einer wässrigen Lösung in einer Konzentration von ca. 1 Gew.% enthalten ist und worin die Lösung auch ca. 1 Gew.% Natriumacetat enthält.

5. Verfahren nach den Ansprüchen 3 oder 4, worin die Imprägnierung mit Silbernitrat bei 70—80°C für ca. 30 bis 60 Minuten durchgeführt wird, bis der Silbergehalt der regenerierten Zellulose ein Niveau von 1—2 Gew.% erreicht hat.

6. Verfahren nach den Ansprüchen 3, 4 oder 5, worin das Titan-Schwefeloxid im Reagenz in einer Konzentration von ca. 1 Gew.% enthalten ist und worin das Reagenz auch ca. 1 Gew.% Natriumcarbonat enthält.

7. Verfahren nach einem der vorhergehenden Ansprüche, worin die Temperatur ca. 80°C beträgt und worin die Zeit ca. 30 Minuten ist und der Gehalt an Titan, der in der Zellulose niedergeschlagen ist, ca. 0,5 Gew.% der Zellulose ist.

8. Verfahren nach Anspruch 3, worin die Titan-Chlorid in einer wässrigen Lösung in einer Konzentration von ca. 0,5 Gew.% vorhanden ist und worin die Lösung auch ca. 1 Gew.% Antimon-Oxid enthält.

9. Verfahren nach Anspruch 8, worin die Temperatur ca. 75°C ist, worin die Zeit ca. 10 Minuten ist und worin die Zellulose mit einer Lösung von Natriumcarbonat nach der Reaktion mit dem ersten Reagenz gewaschen wird, um überschüssige Säure zu neutralisieren, wobei das zweite verwendete Reagenz Silbernitrat in wässriger Lösung bei einer Konzentration von ca. 1 Gew.% der genannten Lösung ist.

10. Verfahren nach Anspruch 9, worin die Silbernitratlösung auch ca. 1 Gew.% Natriumacetat enthält, und worin die Imprägnierung mit Silbernitrat bei 70—80°C für 30 bis 60 Minuten ausgeführt wird, bis der Silbergehalt der regenerierten Zellulose ein Niveau von 1—2 Gew.% der Zellulose erreicht, und wobei der Titangehalt der regenerierten Zellulose ca. 8 Gew.% nach der Imprägnierung mit dem Titan und Antimon beträgt.

**Revendications**

1. Procédé pour fabriquer un séparateur cellulosique imprégné par un complexe de titane et d'argent, pour des piles électrochimiques, ledit procédé consistant à imprégner successivement une feuille de cellulose régénérée dans une zone de traitement située à l'extérieur d'une pile électrochimique, avec deux réactifs aqueux différents sélectionnés pendant un intervalle de temps et à une température, qui sont suffisants pour permettre l'introduction séparée de l'argent et du titane dans la cellulose, et selon lequel l'argent et le titane forment un complexe dans la cellulose de manière à améliorer la résistance à l'oxydation de cette dernière.

2. Procédé selon la revendication 1, selon lequel l'imprégnation est exécutée à une température comprise entre 70°C et 90°C.

3. Procédé selon la revendication 1 ou 2, selon lequel on introduit tout d'abord l'argent, par exemple sous la forme de nitrate d'argent, dans la cellulose régénérée et on introduit ensuite le titane, par exemple sous la forme d'un oxyde de soufre et de titane ou d'un chlorure de titane dans la cellulose régénérée, et selon lequel on introduit tout d'abord du titane, par exemple sous la forme d'un oxyde de soufre et de titane ou sous la forme de chlorure de titane dans la cellulose régénérée et on introduit ensuite l'argent, par exemple sous la forme de nitrate d'argent, dans ladite cellulose régénérée.

4. Procédé selon la revendication 3, selon lequel le nitrate d'argent est présent en solution aqueuse, en une concentration d'environ 1% en poids et selon lequel la solution contient également environ 1% en poids d'acétate de sodium.

5. Procédé selon la revendication 3 ou 4, selon lequel l'imprégnation avec du nitrate d'argent est exécutée à 70—80°C pendant environ 30—60 minutes, jusqu'à ce que la teneur en argent dans la cellulose régénérée atteigne un niveau égal à 1—2% en poids.

6. Procédé selon la revendication 3, 4 ou 5, selon lequel l'oxyde de soufre et de titane est présent dans le réactif en une concentration égale à environ 1% en poids et selon lequel le réactif contient également environ 1% en poids de carbonate de sodium.

7. Procédé selon l'une quelconque des revendications précédentes, selon lequel la température est égale à environ 80°C, et selon lequel la durée est égale à environ 30 minutes et la teneur en titane déposée dans la cellulose est égale à environ 0,5% en poids de la cellulose.

8. Procédé selon la revendication 3, selon lequel le chlorure de titane est présent en solution aqueuse en une concentration égale à environ 0,5% en poids et selon lequel la solution contient également environ 1% en poids d'oxyde d'antimoine.

9. Procédé selon la revendication 8, selon lequel la température est égale à environ 75°C, et selon lequel la durée est égale à environ 10 minutes et selon lequel on lave la cellulose dans une solution de carbonate de sodium après qu'elle ait réagi avec le premier réactif pour neutraliser l'excès d'acidité, le second des réactifs utilisés étant du nitrate d'argent en solution aqueuse, en une concentration égale à environ 1% en poids de ladite solution.

10. Procédé selon la revendication 9, selon lequel la solution de nitrate d'argent contient également environ 1% en poids d'acétate de sodium et selon lequel l'imprégnation avec du nitrate d'argent est exécutée à 70—80°C pendant 30—60 minutes jusqu'à ce que la teneur en argent dans la cellulose régénérée atteigne un niveau égal à 1—2% en poids de la cellulose, la teneur en titane de la cellulose régénérée étant égale à environ 8% en poids après imprégnation avec le titane et l'antimoine.